# EUROPEAN PATENT SPECIFICATION

(11) **EP 3 751 311 B1**
(45) Date of publication and mention of the grant of the patent: **30.08.2023**
(21) Application number: 20178135.8
(22) Date of filing: 03.06.2020
(51) Int. Cl.: G01S 13/95, G01S 7/04

(54) **THREE-DIMENSIONAL WEATHER DISPLAY SYSTEMS AND METHODS THAT PROVIDE REPLAY OPTIONS**
DREIDIMENSIONALE WETTERANZEIGESYSTEME UND VERFAHREN ZUR BEREITSTELLUNG VON WIEDERGABEOPTIONEN
SYSTÈMES MÉTÉOROLOGIQUES D'AFFICHAGE TRIDIMENSIONNEL ET PROCÉDÉS PROPOSANT DES OPTIONS DE RELECTURE

(30) Priority: 13.06.2019 US 201916439892
(43) Date of publication of application: 16.12.2020
(73) Proprietor: Honeywell International Inc., Charlotte, NC 28202 (US)
(72) Inventor: SONGA, Anil Kumar, Morris Plains, NJ New Jersey 07950 (US); VELAPPAN, Kalaiarasu, Morris Plains, NJ New Jersey 07950 (US); DAVIS, Jonathan, Morris Plains, NJ New Jersey 07950 (US)
(74) Representative: LKGlobal UK Ltd.

(56) References cited:
- EP-A2- 2 221 636
- US-B1- 9 244 167
- US-B2- 10 175 353

## Description

### TECHNICAL FIELD

The technical field generally relates to weather display systems, and more particularly relates to three-dimensional weather display systems and methods that provide replay options.

### BACKGROUND

Adverse weather costs the aerospace industry billions of dollars each year through delays, cancellations, diversions, disasters, turbulence and severe storm activity. Turbulence, lightning, hail, and other phenomena, if undetected, can cause a variety of undesirable results, such as discomfort on board and damage to the aircraft, regardless of the size and age of the aircraft. In addition, weather-related delays and cancellations cost airlines millions of dollars and cost countries' economies billions of dollars in lost productivity each year. Therefore, the detection and presentation of weather data is of utmost importance to the technical tasks of flying and operating aircraft.

Generally, the most advanced onboard three-dimensional (3D) weather detection used by air transport, business and military aircraft is performed by a 3D weather radar system. 3D weather radar systems may employ sensors to sense or capture, in real-time, weather data and terrain data within a three-dimensional volume in front of the aircraft; and, an associated 3D weather display system visually depicts or renders the weather data and terrain data on a 3D display unit.

Some onboard 3D weather radar systems may incorporate advances in airborne hazard and weather technology and radio frequency engineering in their generation of the weather data for display. These features can improve a pilot's situational awareness and ability to route around hazards and increase safety over two-dimensional weather radar systems.

Some airborne weather radar systems extend their range of detection with data from external sources as disclosed in US 9 244 167 B1 or US 10 175 353 B2.

However, available onboard 3D weather display systems face some limitations. For example, generally, the displayed 3D weather data does not have a temporal context, and the 3D weather display system generally doesn't provide any options to analyze or review a weather trend. In these scenarios, a pilot or crew must perform a manual analysis of the weather to identify a temporal context or weather trend. An effective manual analysis of a weather trend is labor intensive and requires detailed training and experience and may be put aside for other cognitively demanding tasks being attended to. These limitations can inhibit the pilot's ability to take necessary actions.

Accordingly, technologically improved 3D weather display systems are desirable. The desired system provides selective replay options to display weather trends. The desired 3D weather display system is an improved man-machine interface and provides a functional result of credibly assisting the pilot in performing the technical task of operating the aircraft. The following disclosure provides these technological enhancements, in addition to addressing related issues.

### BRIEF SUMMARY

A processor-implemented method for three-dimensional (3D) weather display is provided. The method includes: receiving, from a 3D weather radar system, real-time 3D weather data within a 3D volume; instructing a display device to display the real-time 3D weather data; storing time-stamped 3D weather data into a memory buffer; receiving, from a user input system, a weather replay request; constructing a weather data loop that is a function of the weather replay request, by extracting time-stamped 3D weather data from the memory buffer; and generating display instructions to render the weather data loop, as a simultaneously and continuously replaying overlay, on the display of the real-time 3D weather data; and at a display device, responsive to the display instructions, rendering the weather data loop, as a simultaneously and continuously replaying overlay, on the display of the real-time 3D weather data.

Also provided is an aircraft system, including: a three-dimensional (3D) weather radar system for sensing real-time 3D weather data within a 3D volume; a memory buffer communicatively coupled to the 3D weather radar system, for storing the real-time 3D weather data, as time-stamped 3D weather data; and a 3D weather display system communicatively coupled to the 3D weather radar system and the memory buffer, the 3D weather display system including: a display device for displaying the real-time 3D weather data; a user input system; and a processor communicatively coupled to the display device and the user input system, the processor for: receiving, from the 3D weather radar system, the real-time 3D weather data within a 3D volume; instructing the display device to display the real-time 3D weather data; receiving, from the user input system, a weather replay request; constructing a weather data loop that is a function of the weather replay request, by extracting time-stamped 3D weather data from the memory buffer; and generating display instructions to render the weather data loop, as a simultaneously and continuously replaying overlay, on the display of the real-time 3D weather data; and the display device, responsive to the display instructions, renders the weather data loop, as a simultaneously and continuously replaying overlay, on the display of the real-time 3D weather data.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present application will hereinafter be described in conjunction with the following drawing figures, wherein like numerals denote like elements, and:
FIG. 1 is an illustration of an aircraft having a three-dimensional (3D) weather radar system and a 3D weather display system, in accordance with various embodiments;
FIG. 2 is a block diagram of a 3D weather display system, in accordance with various exemplary embodiments;
FIG. 3 depicts a method for 3D weather display, in accordance with various exemplary embodiments;
FIG. 4 is an illustration depicting various spatial extents for selecting a weather replay;
FIG. 5 depicts another method for 3D weather display, in accordance with various exemplary embodiments;
FIG. 6 depicts a conventional cockpit display showing weather data on display; and
FIG. 7 depicts an enhanced cockpit display having an enhanced 3D weather display with weather replay option, in accordance with various exemplary embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. The embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, summary, or the following detailed description.

As mentioned, with available onboard 3D weather display systems, the displayed 3D weather data generally does not have a temporal context, and the 3D weather display system generally doesn't provide any options to analyze or review a weather trend. This limitation causes a pilot or crew desiring to analyze or review a weather trend to have to perform a manual analysis that is labor intensive and requires detailed training and experience.

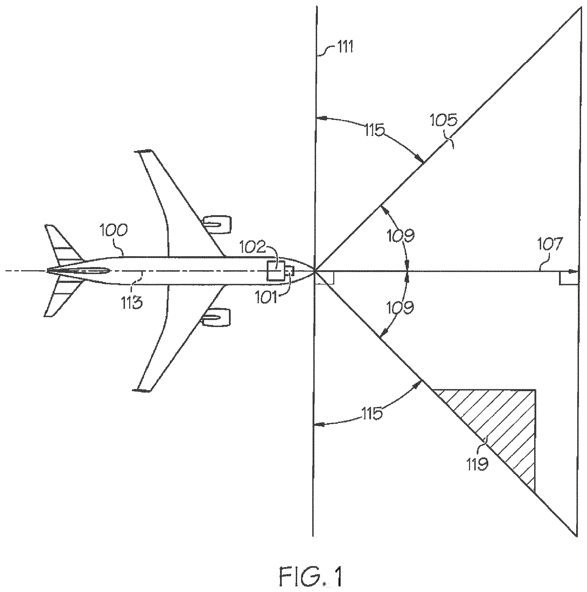

In response to at least these conventional 3D weather display system limitations, an enhanced 3D display system (FIG. 1, 102) is provided. The enhanced 3D weather display system is an objective improvement in the 3D presentation of weather data and credibly assists the pilot in performing the technical task of operating the aircraft.

Turning now to FIG. 1, in an embodiment, the enhanced 3D weather display system **102** (also referred to herein as "system" **102**) is generally associated with a mobile platform **100,** drone, or vehicle. In various embodiments, and the example described herein, the mobile platform **100** is an aircraft, and is referred to as aircraft **100.** Aircraft **100** is shown equipped with a conventionally available onboard 3D weather radar system **101** and the provided 3D weather display system **102.**

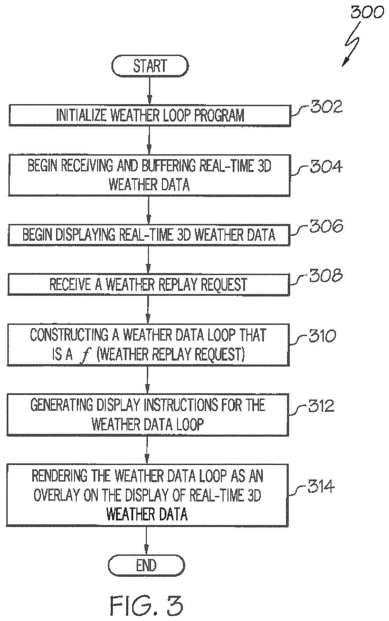

The 3D weather radar system **101** senses weather data within a predefined three-dimensional volume **105** in front of the aircraft **100.** In some embodiments, the 3D weather radar system **101** senses weather data and terrain data within the volume **105** in front of the aircraft **100.** In an embodiment, the predefined volume **105** is a conical shape that begins at the nose of the aircraft **100** and extends forward along an extension of the aircraft centerline **113,** by a range **107.** The conical shape is imparted on the volume **105** by splaying outward from the forward extension of the aircraft centerline **113** by an angle alpha **109** in all directions. Described differently, line **111** is drawn tangent to the nose of aircraft **100** and perpendicular to the aircraft centerline **113,** therefore an angle **115** plus angle alpha **109** equals 90 degrees. In various embodiments, alpha **109** is 80 degrees, and angle **115** is 10 degrees. In various embodiments, the range **107** is 320 nautical miles. The subset **119** is described in connection with FIG. 3, below.

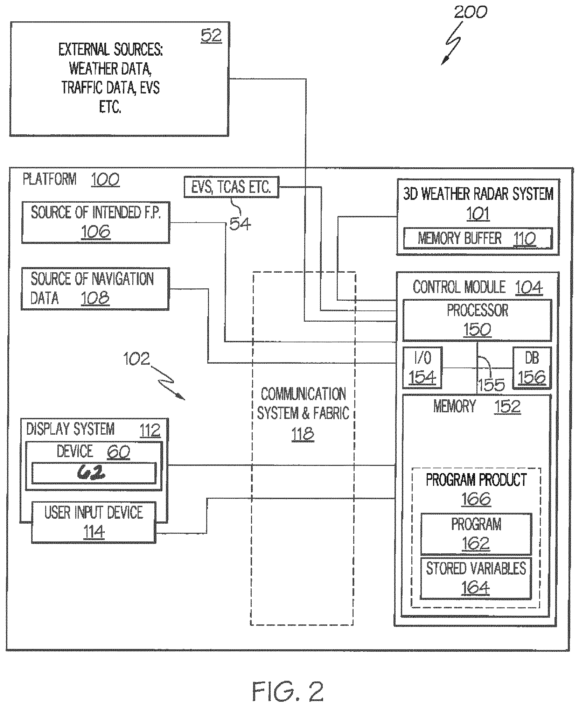

At a snapshot of time, *t0,* the real-time weather data for the 3D volume **105** constitutes a volumetric block of data that is time-stamped *t0.* Analyzing a weather trend or temporal context for weather requires that a pilot have access to at least some weather data from a timestamp *t1* that is prior to *t0* (i.e., *t1* is before *t0, t1<t0*)*.* As shown in FIG. 2, the memory buffer **110** is used to store the real-time 3D weather data, as time-stamped 3D weather data. The control module **104** (described in more detail below), may control the storage in the memory buffer **110** by, for each time *t,* associating the time stamp *t* with the volumetric block of data that is the real-time weather data for the 3D volume **105.** In some embodiments, the memory buffer **110** is part of the on-board 3D weather radar system **101.** In other embodiments, the memory buffer **110** is a portion of a memory **152** within the 3D weather display system **102.**

The controlling component of the system **102** is the control module **104.** In some embodiments, the control module **104** may be integrated within a preexisting mobile platform management system, avionics system, cockpit display system (CDS), flight controls system (FCS), or aircraft flight management system (FMS). Although the control module **104** is shown as an independent functional block, onboard the aircraft **100,** in other embodiments, it may exist in an electronic flight bag (EFB) or portable electronic device (PED), such as a tablet, cellular phone, or the like. In embodiments in which the control module is within an EFB or a PED, a display system **112** and user input device **114** may also be part of the EFB or PED.

The control module **104** may be operationally coupled to any combination of the following aircraft systems: a source of an intended flight path **106,** such as a navigation database (NavDB); a source of real-time aircraft navigation data **108,** such as a navigation system; one or more external sources **52** of data, such as sources of 3D weather data, traffic data, EVS data, and/or other sensor data; and, a display system **112.** In various embodiments, a communication system and fabric **118** may be employed to interface the aircraft systems. Additionally, the system **102** may include a user input device **114.** The functions of these aircraft systems, and their interaction, are described in more detail below.

An intended flight path may include a series of intended geospatial midpoints between a departure and an arrival, as well as performance data associated with each of the geospatial midpoints (non-limiting examples of the performance data include intended navigation data, such as: intended airspeed, intended altitude, intended acceleration, intended flight path angle, and the like). As such, the intended flight path may be part of an operational flight plan (OFP). A source of the intended flight path **106** may be a storage location or a user input device. In various embodiments, a navigation database, NavDB, is the source of the active trajectory or OFP. The NavDB is generally a storage location that may also maintain a database of flight plans, and/or information regarding terrain and airports and/or other potential landing locations (or destinations) for the aircraft **100.**

Real-time aircraft navigation data may include any of: an instantaneous location (e.g., the latitude, longitude, orientation), an instantaneous heading (i.e., the direction the aircraft is traveling in relative to some reference), a flight path angle, a vertical speed, a ground speed, an instantaneous altitude (or height above ground level), and a current phase of flight of the aircraft **100.** As used herein, "real-time" is interchangeable with current and instantaneous. In some embodiments, the real-time aircraft navigation data is generated by a navigation system. The navigation system may be realized as including a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation of a flight management system (FMS), as will be appreciated in the art. In various embodiments, the data referred to herein as the real-time aircraft navigation data may be referred to as state data. The real-time aircraft navigation data is made available, generally by way of the communication system and fabric **118,** so other components, such as the control module **104** and the display system **112,** may further process and/or handle the aircraft state data.

External sources **52** provide real-time 3D weather data, 3D traffic data, EVS data, and other sensor data. In various embodiments, the external source **52** is another aircraft (traffic). In various embodiments, one or more external sources 52 include another aircraft, a ground station, a satellite, or another transmitting source. When a nearby traffic is equipped with the enhanced 3D weather display system **102,** it may transmit to the aircraft **100,** its own real-time and/or time-stamped three-dimensional weather data. In various embodiments, the external source **52** is a neighbor traffic and the data received from the external source includes real-time traffic data. Each individual occurrence of conventionally available traffic data is usually a snapshot of information about a specific traffic provided by at least one of: an Automatic Dependent Surveillance-Broadcast (ADS-B); a Traffic Information Services-Broadcast (TIS-B); an onboard Traffic Collision and Avoidance System (TCAS); a radio altitude sensor, inertial reference system (IRS); an altitude and heading reference system (AHRS); and, etc. Real-time traffic data generally provides the control module **104** with a snapshot of aircraft-specific traffic information for one or more traffic around an ownship at any given time. The real-time traffic information may include: an instantaneous position (e.g., the latitude, longitude, orientation), an instantaneous heading (i.e., the direction the traffic is traveling in relative to some reference), a flight path angle, a vertical speed, a ground speed, an instantaneous altitude (or height above ground level), an aircraft track, drift, flight path angle, a current phase of flight of the traffic, inertial side slip, etc. A plurality of neighbor traffic has an associated plurality of respective traffic data and or an associated plurality of 3D weather data.

In various embodiments, a communications system and fabric **118** is configured to support instantaneous (i.e., real time or current) communications between on-board systems (i.e., the source of the intended flight path **106,** the source of aircraft navigation data **108,** and the display system **112**), the control module **104,** and one or more external data source(s) **52.** As a functional block, the communications system and fabric **118** represents one or more transmitters, receivers, and the supporting communications hardware and software required for components of the system **102** to communicate as described herein. In various embodiments, the communications system and fabric **118** may have additional communications not directly relied upon herein, such as bidirectional pilot-to-ATC (air traffic control) communications via a datalink; support for an automatic dependent surveillance broadcast system (ADS-B); a communication management function (CMF) uplink; a terminal wireless local area network (LAN) unit (TWLU); an instrument landing system (ILS); and, any other suitable radio communication system that supports communications between the aircraft **100** and the various external source(s). In various embodiments, the control module **104** and communications system and fabric **118** also support the herein referenced controller pilot data link communications (CPDLC), such as through an aircraft communication addressing and reporting system (ACARS) router; in various embodiments, this feature may be referred to as a communications management unit (CMLT) or communications management function (CMF). In summary, the communications system and fabric **118** may allow the aircraft **100** and the control module **104** to receive information that would otherwise be unavailable to the pilot and/or co-pilot using only the onboard systems.

The user input device **114** and the control module **104** may be cooperatively configured to allow a user (e.g., a pilot, co-pilot, or crew member) to interact with display devices **60** in the display system **112** and/or other elements of the system **102.** Depending on the embodiment, the user input device **114** may be realized as a cursor control device (CCD), keypad, touchpad, keyboard, mouse, touch panel (or touchscreen), joystick, knob, line select key, voice controller, gesture controller, or another suitable device adapted to receive input from a user. When the user input device **114** is configured as a touchpad or touchscreen, it may be integrated with the display system **112.** As used herein, the user input device **114** may be used by a pilot to communicate with external sources, such as ATC, to modify or upload the program product **166,** etc. In various embodiments, the display system **112** and user input device **114** are onboard the aircraft **100** and are also operationally coupled to the communication system and fabric **118.** In some embodiments, the control module **104,** user input device **114,** and display system **112** are configured as a control display unit (CDU).

In various embodiments, the control module **104,** alone, or as part of a central management computer (CMS) or a flight management system (FMS), draws upon data and information from the source of intended flight path **106** and source of aircraft navigation data **108** to provide real-time flight guidance for aircraft **100.** The real time flight guidance may be provided to a user as images, text, symbols, or movies, on the display system **112,** audible emissions from an audio system, or the like. The display system **112** may display, on a display device **60,** the ownship and the environment surrounding the ownship, and additionally render relevant information thereon. For example, the control module **104** may compare an instantaneous position and heading of the aircraft **100** with the operational flight plan data for the aircraft **100** and generate display commands to render images showing these features and distinguishing them from each other. The control module **104** may further provide flight guidance responsive to associating a respective airport, its geographic location, runways (and their respective orientations and/or directions), instrument procedures (e.g., approach procedures, arrival routes and procedures, takeoff procedures, and the like), airspace restrictions, and/or other information or attributes associated with the respective airport (e.g., widths and/or weight limits of taxi paths, the type of surface of the runways or taxi path, and the like) with the instantaneous position and heading of the aircraft **100** and/or with the intended flight plan for the aircraft **100.**

The control module **104** may be said to display various images and selectable options described herein. In practice, this may mean that the control module **104** generates display commands. The control module **104** may perform display processing methods and graphics processing methods to thereby generate display commands for the display system **112** to cause the display device **60** to render thereon the image **62.** Display processing methods include various formatting techniques for visually distinguishing objects and routes from among other similar objects and routes. Graphics processing methods may include various types of computer-generated symbols, text, and graphic information representing, for example, pitch, heading, flight path, airspeed, altitude, runway information, waypoints, targets, obstacles, terrain, and required navigation performance (RNP) data in an integrated, multi-color or monochrome form.

The display system **112** is configured to continuously receive and process the display commands from the control module **104.** Responsive to the display commands, the display system **112** renders image **62** comprising various pictorial images, symbolic indicators, alerts, graphical user interface elements, tables, menus, and buttons, as described herein. The display system **112** includes a display device **60.** In some embodiments, weather and in-air traffic around an ownship is displayed in the ownship cockpit in a lateral view, such as, on a horizontal situation indicator (HIS) or interactive navigation (INAV) display found on a multi-function display (MFD), and/or in a perspective view on a synthetic vision system (SVS). In other embodiments, weather and in-air traffic around an ownship is displayed in the ownship cockpit in a vertical view, such as, on a vertical situation display (VSD). In still other embodiments, weather and in-air traffic around an ownship is concurrently displayed in a lateral view and a vertical view. In exemplary embodiments, the display device **60** is realized on one or more electronic display devices, such as a multi-function display (MFD) or a multi-function control display unit (MCDU), configured as any combination of: a head up display (HUD), an alphanumeric display, a vertical situation display (VSD) and a lateral navigation display (ND). Further, in various embodiments described herein, the display system **112** includes a synthetic vision system (SVS).

As used herein, the term "module" refers to any means for facilitating communications and/or interaction between the elements of the system **102** and performing additional processes, tasks and/or functions to support operation of the system **102,** as described herein. Accordingly, in various other embodiments, the control module **104** may be any hardware, software, firmware, electronic control component, processing logic, and/or processor device, individually or in any combination, such as: a content addressable memory; a digital signal processor; an application specific integrated circuit (ASIC), a field programmable gate array (FPGA); any suitable programmable logic device; combinational logic circuit including discrete gates or transistor logic; discrete hardware components and memory devices; and/or any combination thereof, designed to perform the functions described herein.

In the embodiment shown in FIG. 2, the control module **104** is depicted as an enhanced computer system implemented or realized with a processor **150** and memory **152.** The processor **150** is specifically programmed with the below described weather replay program **162,** which it executes to perform the operations and functions attributed to the control module **104** and the system **102.** The processor **150** may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals. The memory **152** may comprise RAM memory, ROM memory, flash memory, registers, a hard disk, or another suitable non-transitory short or long-term storage media capable of storing computer-executable programming instructions or other data for execution. The memory **152** may be located on and/or co-located on the same computer chip as the processor **150.** Generally, the memory **152** maintains data bits and may be utilized by the processor **150** as storage and/or a scratch pad during operation. Information in the memory **152,** such as the weather replay program **162** may be organized and/or imported from an external source during an initialization step of a process; it may also be programmed with the weather replay program **162** via a user input device **114.** In some embodiments, a database **156** is part of the memory **152.** In various embodiments, the database **156** has airport features data and terrain features data stored within it.

The weather replay program **162** may be stored in the memory **152.** Weather replay program **162** includes rules and instructions which, when executed by the processor, cause the control module to perform the functions, techniques, and processing tasks associated with the operation of the system **102.** The weather replay program **162** and associated stored variables **164** may be stored in a functional form on computer readable media, for example, as depicted, in memory **152.** While the depicted exemplary embodiment of the control module **104** is described in the context of a fully functioning computer system, those skilled in the art will recognize that the mechanisms of the present disclosure are capable of being distributed as a program product **166.**

As a program product **166,** one or more types of non-transitory computer-readable signal bearing media may be used to store and distribute the weather replay program **162,** such as a non-transitory computer readable medium bearing the program **162** and containing therein additional computer instructions for causing a computer processor (such as the processor **150** in control module **104**) to load and execute the weather replay program **162.** Such a program product **166** may take a variety of forms, and the present disclosure applies equally regardless of the type of computer-readable signal bearing media used to carry out the distribution. Examples of signal bearing media include: recordable media such as floppy disks, hard drives, memory cards and optical disks, and transmission media such as digital and analog communication links. It will be appreciated that cloud-based storage and/or other techniques may also be utilized as memory **152** and as program product time-based viewing of clearance requests in certain embodiments.

In various embodiments, the processor/memory unit of the control module **104** may be communicatively coupled (via a bus **155**) to an input/output (I/O) interface **154,** and a database **156.** The bus **155** serves to transmit programs, data, status and other information or signals between the various components of the control module **104.** The bus **155** can be any suitable physical or logical means of connecting computer systems and components. This includes, but is not limited to, direct hard-wired connections, fiber optics, infrared and wireless bus technologies.

The I/O interface **154** enables intra control module **104** communication, as well as communications between the control module **104** and other system **102** components, and between the control module **104** and the external data sources via the communication system and fabric **118.** The I/O interface **154** may include one or more network interfaces and can be implemented using any suitable method and apparatus. In various embodiments, the I/O interface **154** is configured to support communication from an external system driver and/or another computer system. In one embodiment, the I/O interface **154** is integrated with the communication system and fabric **118** and obtains data from external data source(s) directly. Also, in various embodiments, the I/O interface **154** may support communication with technicians, and/or one or more storage interfaces for direct connection to storage apparatuses, such as the database **156.**

Having described the functional blocks, we now move to the operation of the system **102.** The 3D weather display system **102** introduces an optimal strategy for rendering a replay of (i) the total available 3D weather data, and/or (ii) a subset of the total available 3D weather data, as a simultaneously and continuously replaying overlay, on the display of the real-time 3D weather data.

In FIG. 3, a method **300** for enhanced 3D weather display is described. Many of the method steps are performed by the control module **104.** In an embodiment, the control module **104** comprises a processor **150** and memory **152,** therefore, many of the method steps may be described as being performed by the control module **104** and/or by the processor **150.** The control module **104** is initialized at **302.** Therefore, in an embodiment, at **302,** the processor **150** is programmed with the program **162,** and then begins executing the instructions embodied in the program **162** to perform the functions attributed to the control module **104.** At **304,** the processor **150** begins receiving real-time 3D weather data and storing time-stamped 3D weather data into the memory buffer **110.** In various embodiments, the time stamps are continuous. As used herein, the collective time stamps stored in the memory buffer **110** at any given time are referred to as a span of time. As the time-stamped 3D weather data is sequentially captured and stored into the memory buffer **110,** the memory buffer **110** can eventually fill up or the amount of collected data can become unreasonable, therefore the time span may be limited. In an embodiment, the span of time is two hours. In various embodiments, the time span keeps moving to begin with the current time and extend backward in time; therefore, oldest weather data is discarded, and most recent weather data is kept.

At **306,** the processor **150** begins displaying the real-time 3D weather data on the display device **60.** Although not the subject of the present invention, it is to be understood that the display of the real-time 3D weather data on the display device **60** may include the display of aspects of navigational information (such as that provided by the source of the intended flight plan 108 and the source of navigation data 108), which is responsive to the processor **150** receiving and processing navigational data for the aircraft **100;** this is understood to be continuous. The display system **112** may utilize the ownship navigational data to render current views in images displayed on display device **60** based at least in part on the navigational data for the aircraft **100.**

At operation **308,** the processor **150** receives a weather replay request. In various embodiments, the processor **150** receives the weather replay request prescribed in real-time from a pilot or crew via a user input device **114.** In other embodiments, at **308,** the processor obtains or uploads from memory a weather replay request that was previously prescribed by a user. The weather replay request may take various forms, and the processor **150** is operable to receive each of the weather replay requests. In an embodiment, the weather replay request is for the 3D volume **105.** In an embodiment, the weather replay request is a selected subset **119** of the 3D volume **105** or a selected time frame from among the time span. In another embodiment, the weather replay request is any of: a selected subset **119** of the 3D volume **105,** a selected altitude, and a selected time frame from among the time span. In another embodiment, the processor **150** is capable or accepting a weather replay request that is any of: a selected subset **119** of the 3D volume **105,** a selected altitude, a selected point of view, and a selected time frame from among the time span. In another embodiment, the processor **150** is operable to receive a pilot selection of a phase of flight or flight leg and constructs a subset volume surrounding the pilot selection for display.

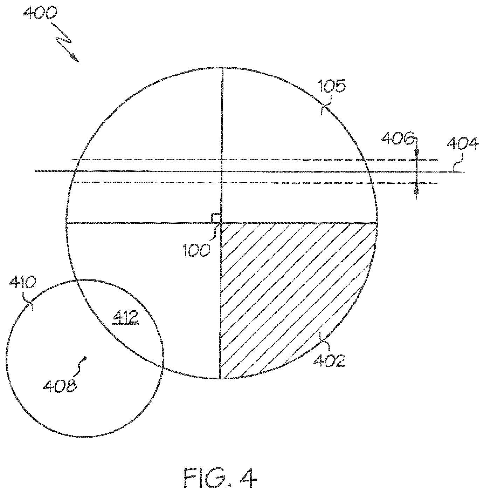

At **310,** the processor **150** constructs a weather data loop that is a function of the weather replay request. As may be recognized, each of: the selected subset **119** of the 3D volume **105,** the selected altitude, and the selected point of view are spatial requests. For spatial weather replay requests, to construct the weather data loop, the processor **150** identifies a spatial extent. If no duration of time is provided with the spatial extent, the processor **150** applies a preprogrammed duration of time. For example, in FIG. 4, a simplified two-dimensional view **400** is a forward-looking view from the nose of the aircraft **100** forward into the 3D volume **105** (it is understood that although the provided view **400** is in two-dimensions, it is referencing the 3D volume **105**). If the weather replay request is for the quadrant **402,** quadrant **402** is the spatial extent, and the processor **150** extracts time-stamped 3D weather data from the memory buffer **110** that matches the spatial extent, quadrant **402.** In an embodiment, the user has also supplied a duration of time, so the processor **150** further limits the extracted time-stamped 3D weather data from the memory buffer **110** to the provided duration of time. If the weather replay request is an altitude **404,** the processor **150** applies a preprogrammed margin **406** and the spatial extent is the band created by the altitude **404** within the margin **406.** The duration of time procedure is the same as already described.

When the processor **150** receives a weather replay request that is only a duration of time, the processor applies a default spatial extent. In an embodiment, the default spatial extent is the entire 3D volume **105.** The "point of view" is described in more detail below.

At **312** the processor **150** generates display instructions for the display device **60** to render the weather data loop, as a simultaneously and continuously replaying overlay, on the display of the real-time 3D weather data. At **314,** the display device **60** responds to the display instructions by rendering the weather data loop, as a simultaneously and continuously replaying overlay, on the display of the real-time 3D weather data. The display instructions include instructions to display the real-time 3D weather data using a first visualization format; and render the weather data loop using a second visualization format that is different than the first visualization format. In an embodiment, the first format is the rainbow of colors, used to display the real-time 3D weather data and communicate weather intensity, and the second format is the same rainbow of colors, but with added texture, such as cross-hatching. In another embodiment, the first format is a grey scale, used to display the real-time 3D weather data and communicate weather intensity, and the second format is the same grey scale, but with added texture, such as dashed lines. A variety of other techniques may be used to distinguish the real-time 3D weather data from the replay weather data loop.

After **314** the method **300** may end or repeat.

As mentioned, the communications system and fabric **118** is communicatively coupled to the 3D display system and is for receiving real-time sensor data from external sources **52.** In various embodiments, the data from external sources **52** may include 3D weather data and traffic data, 3D traffic data, enhanced vision system (EVS) data, and other sensor data. In various embodiments, the data from external sources **52** include 3D weather data, 3D traffic data, EVS data, and other sensor data. Additionally, and with reference again to FIG. 2, the communications system and fabric **118** is for receiving real-time sensor data from onboard sensor sources, such as, but not limited to, 3D weather radar system **101,** and internal sensor sources **54,** such as a source of traffic data, like TCAS, and an onboard enhanced vision system (EVS).

It is to be appreciated that, during operation, the processor **150** is continuously operable to receive data from one or more onboard sources, such as 3D weather radar system **101,** and internal sources **54,** such as EVS, TCAS, etc., and determine the point of view of the ownship aircraft **100** and generate the predefined three-dimensional volume (FIG. 1, 105) in front of the aircraft **100.** In various embodiments, wherein the communications system **118** is further operable for receiving sensor data from on-board sources including: real-time 3D weather data, 3D traffic data, EVS sensor data and other sensor data, the processor **150** is further for determining the point of view of the external source (FIG. 4, 408) based on received sensor data from the one or more on-board sources.

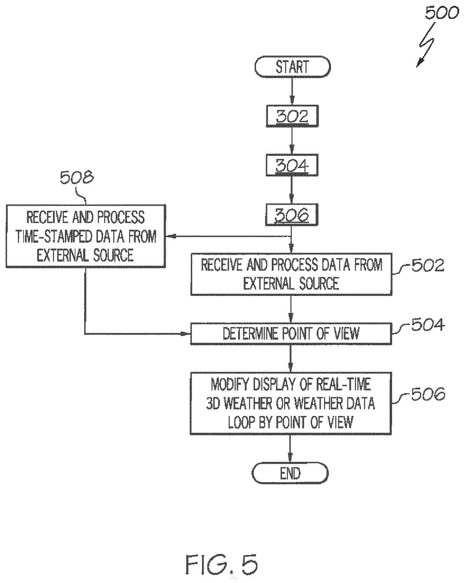

Turning now to FIG. 5 and with continued reference to FIGS 1-4, in another exemplary method **500,** after **302, 304** and **306** from the method **300,** the processor **150** further: at **502,** receives and processes the real-time 3D weather data and traffic data transmitted from an external source (FIG. 4, 408) to determine therefrom a point of view of the external source **408** (at **504**). As shown in FIG. 4, external source **408** has its own 3D volume **410,** of which some spatial overlap **412** with 3D volume **105** is present. In order to determine a point of view of the external source **408,** the processor **150** uses the traffic data to determine a spatial relationship between the external source **408** and the aircraft **100** (e.g., external source is 1 nautical mile behind aircraft **100,** and 10,000 feet below the altitude of aircraft **100**). The spatial relationship enables the processor **150** to determine the point of view of the external source **408.** In various embodiments, the external source **52** is another aircraft (aircraft 2). In various embodiments, the external source **52** is a ground station, satellite, cloud, or other transmitting source. At **506,** the processor **150** may cause the display device **60** to integrate into the display of the real-time 3D weather, traffic, EVS, and sensor data the externally sourced real-time 3D weather, traffic, EVS, and sensor data modified by the point of view of the other aircraft or transmitting source. In various embodiments, at **506,** the operation of causing the display device **60** to integrate into the display of the real-time 3D weather data the externally sourced real-time 3D weather data modified by the point of view of the other aircraft is contingent upon having received a point of view weather replay request.

In various embodiments, at **508,** the processor **150** receives and processes time stamped 3D weather data and traffic data transmitted from the external source (FIG. 4, 408) and determines therefrom the point of view of the external source **408** (at **504**). At **506,** the processor **150** may cause the display device **60** to integrate into the weather data loop respective time-stamped 3D weather data from the external source **408.** After **506,** the method **500** may repeat or end. In various embodiments, at **502** and/or **508,** the processor **150** receives, for each of a plurality of traffic, respective 3D weather data and/or time stamped 3D weather data.

As alluded to, traffic information is information about other aircraft in the vicinity of the aircraft **100,** and the traffic information received from a neighbor traffic may comprise: a traffic identification, a position (latitudinal and longitudinal), orientation (roll, pitch), aircraft track, speed, altitude, distance from ownship, drift, flight path angle, a current phase of flight of the traffic, a heading, an inertial side slip, etc. In various embodiments, at **502** and/or **508,** the processor **150** receives, for each of a plurality of traffic, respective traffic information.

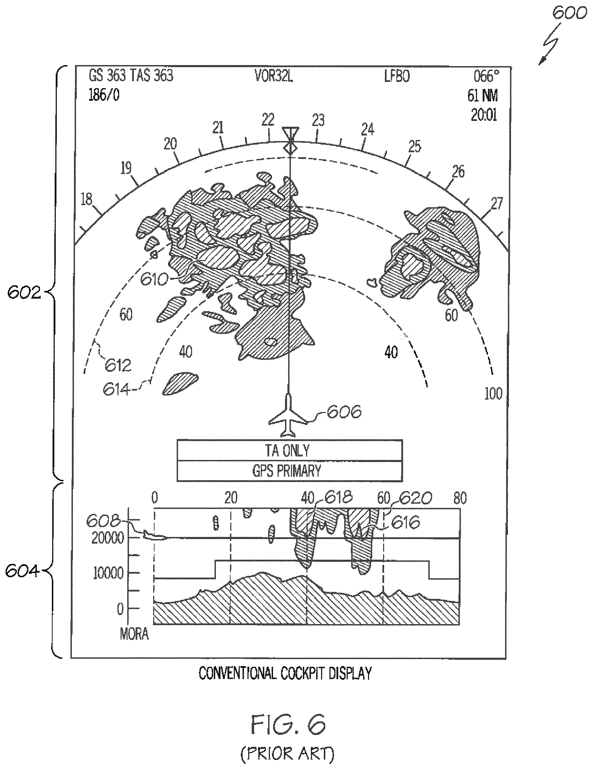

FIG. 6 depicts a conventional cockpit display **600,** having an upper portion that is a lateral navigation display, also referred to as a horizontal navigation display **602,** and a lower portion that is a vertical situation display **604.** With respect to cockpit display **600,** and as may be familiar to those with skill in the art: the aircraft **100** is demarked aircraft **606** on the horizontal navigation display **602,** roughly the center bottom of the horizontal navigation display **602,** and having multiple concentric distance/range arcs demarking nautical miles (NM) extending around the aircraft **606;** and, the aircraft **100** is demarked aircraft **608** on a vertical altitude tape on the left in the vertical situation display (VSD) **604.** The vertical speed tape extends from zero at the bottom to above 25,000 ft above sea level (the aircraft **608** is located at approximately 20000 ft. above sea level). Moving left to right horizontally in the VSD **604,** distance/range ahead of the aircraft **608** is demarked in nautical miles. FIG. 6 is understood to depict a snapshot in time of a continuous rendering of real-time 3D weather. One weather event **610** is rendered on the horizontal navigation display **602** extending at least between 40 nautical miles (**614**) and **60** nautical miles (**612**) ahead of the aircraft **606,** to the left of an extension of the aircraft **100** centerline. Weather event **610** corresponds to weather event **616** on the VSD **604,** which is depicted at least between 40 nautical miles (**618**) and **60** nautical miles (**620**) ahead of aircraft **608.**

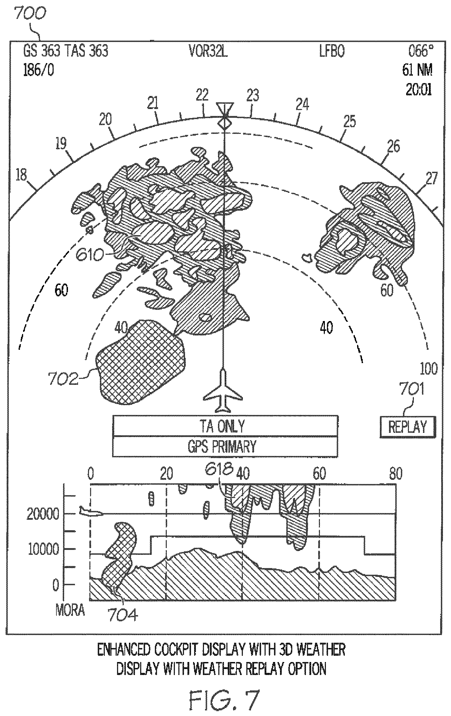

Turning now to FIG. 7, enhanced cockpit display **700** begins with the features of conventional cockpit display **600** and adds features that the 3D weather display system **102** introduces, such as selectable replay options. A replay indicator **701** is rendered on the enhanced cockpit display **700** to show a viewer that the replay option is in use. In FIG. 7, the replay indicator **701** is the word "replay" in a text box with a visually distinguishable boundary, however, multiple other replay indicators **701** may be employed. In the embodiment depicted in FIG. 6 and FIG. 7, the weather events **610** and **616** are rendered in first format. The first format in the example embodiment is a grey scale to visually distinguish intensity. In FIG. 7, a weather data loop that is a function of a user supplied weather replay request has been constructed by the processor **150,** and the resulting weather data loop depicts a weather event **702** less than 40 nautical miles from the aircraft **606.** The processor **150** renders the weather data loop using a second format that is different than the first format. In the exemplary embodiment, the second format is the grey scale of the first format, with added texture, specifically, cross-hatching, however, as stated, the first and second formats can vary, the only requirement is that they are distinguishably different from each other. The weather event **702** is also depicted in the VSD **604** as weather event **704.** When data from other external sources 52, such as additional sensor data from traffic sensors, EVS sensors, or the like, is received and processed by the control module **104,** additional formats may be used to distinguish each of them from each other.

Thus, technologically improved systems and methods for 3D weather display with replay options are provided.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality. Whether such functionality is implemented as hardware or software depends upon the application and design constraints imposed on the overall system.

Skilled artisans may implement the described functionality in varying ways for each application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

Further, the various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of the method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. When "or" is used herein, it is the logical or mathematical or, also called the "inclusive or." Accordingly, A or B is true for the three cases: A is true, B is true, and, A and B are true. In some cases, the exclusive "or" is constructed with "and;" for example, "one from A and B" is true for the two cases: A is true, and B is true.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

## Claims

1. An aircraft system, comprising:
a three-dimensional (3D) weather radar system (101) for sensing real-time 3D weather data within a 3D volume;
a memory buffer (110) communicatively coupled to the 3D weather radar system, for storing the real-time 3D weather data, as time-stamped 3D weather data; and
a 3D weather display system (102) communicatively coupled to the 3D weather radar system and the memory buffer, the 3D weather display system comprising:
a display device (60) for displaying the real-time 3D weather data;
a user input system (114); and
a processor (150) communicatively coupled to the display device and the user input system, the processor for:
receiving, from the 3D weather radar system, the real-time 3D weather data within a 3D volume (105);
instructing the display device to display the real-time 3D weather data;
receiving, from the user input system, a weather replay request;
constructing a weather data loop that is a function of the weather replay request, by extracting time-stamped 3D weather data from the memory buffer; and
generating display instructions to render the weather data loop, as a
simultaneously and continuously replaying overlay of the extracted time-stamped 3D weather data, on the display of the real-time
3D weather data; and
the display device, responsive to the display instructions, renders the weather data loop, as a simultaneously and continuously replaying overlay of the extracted time-stamped 3D weather data, on the display of the real-time 3D weather data.

2. The aircraft system of claim 1, wherein:
to construct the weather data loop, the processor identifies a spatial extent and a duration of time and extracts time-stamped 3D weather data from the memory buffer that matches the respective spatial extent and the respective duration of time.

3. The aircraft system of claim 2, wherein:
a weather replay request is any of: a selected subset of the 3D volume, a selected time frame, a selected altitude, and a selected point of view.

4. The aircraft system of claim 3, wherein the display device further:
displays the real-time 3D weather data using a first visualization format; and
renders the weather data loop using a second visualization format that is different than the first visualization format.

5. The aircraft system of claim 4, further comprising:
a communications system communicatively coupled to the display system, the communications system for receiving from an external source, one or more of: real-time 3D weather data, 3D traffic data, EVS data or any other sensor data; and
wherein the processor is further for:
determining a point of view of the external source; and
generating instructions for the display device to integrate into the display of the real-time 3D weather data the received real-time 3D weather data from the external source, modified by the point of view of the external source;
wherein the communications system is further operable for receiving from an on-board source, one or more of: real-time 3D weather data, 3D traffic data, EVS sensor data and other sensor data; and
wherein the processor is further for:
determining the point of view of the external source based on received sensor data from the on-board source.

6. The aircraft system of claim 5, wherein the processor is further for:
receiving time stamped data from the external source;
receiving time stamped data from the internal source; and
integrating the time stamped data from the external source and time stamped data from the internal source into the weather data loop.

7. A processor-implemented method for three-dimensional (3D) weather display, comprising:
receiving (304), from a 3D weather radar system, real-time 3D weather data within a 3D volume;
instructing (306) a display device to display the real-time 3D weather data;
storing (304) time-stamped 3D weather data into a memory buffer;
receiving (308), from a user input system, a weather replay request;
constructing (310) a weather data loop that is a function of the weather replay request, by extracting time-stamped 3D weather data from the memory buffer; and
generating (312) display instructions to render the weather data loop, as a simultaneously and continuously replaying overlay of the extracted time-stamped weather data, on the display of the real-time 3D weather data; and
at a display device, responsive to the display instructions, rendering (314) the weather data loop, as a simultaneously and continuously replaying overlay of the extracted time-stamped weather data, on the display of the real-time 3D weather data.

8. The method of claim 7, wherein:
constructing the weather data loop comprises identifying a spatial extent and a duration of time and extracting time-stamped 3D weather data from the memory buffer that matches the respective spatial extent and the respective duration of time.

9. The method of claim 8, wherein:
a weather replay request is any of: a selected subset of the 3D volume, a selected time frame, a selected altitude, and a selected point of view.

10. The method of claim 9, further comprising:
at the display device,
displaying the real-time 3D weather data using a first visualization format; and
rendering the weather data loop using a second visualization format that is different than the first visualization format.

11. The method of claim 10, further comprising:
receiving (502) from an external source, one or more of: real-time 3D weather data, 3D traffic data, EVS data; and
wherein the processor is further for:
determining (504) a point of view of the external source; and
generating (506) instructions for the display device to integrate into the display of the real-time 3D weather data the received real-time 3D weather data from the external source, modified by the point of view of the external source;
wherein the communications system is further operable for receiving from an on-board source, one or more of: real-time 3D weather data, 3D traffic data, EVS sensor data and other sensor data; and
wherein the processor is further for:
determining the point of view of the external source based on received sensor data from the on-board source.

12. The method of claim 11, further comprising:
receiving time stamped data from the external source;
receiving time stamped data from the internal source; and
integrating the time stamped data from the external source and time stamped data from the internal source into the weather data loop.

## Patentansprüche

1. Flugzeugsystem, umfassend:
ein dreidimensionales (3D) Wetterradarsystem (101) zum Erfassen von Echtzeit-3D-Wetterdaten innerhalb eines 3D-Volumens;
einen Speicherpuffer (110), der kommunikativ mit dem 3D-Wetterradarsystem gekoppelt ist, um die Echtzeit-3D-Wetterdaten als zeitgestempelte 3D-Wetterdaten zu speichern; und
ein 3D-Wetteranzeigesystem (102), das kommunikativ mit dem 3D-Wetterradarsystem und dem Speicherpuffer gekoppelt ist, wobei das 3D-Wetteranzeigesystem umfasst:
eine Anzeigevorrichtung (60) zum Anzeigen der Echtzeit-3D-Wetterdaten;
ein Benutzereingabesystem (114); und
einen Prozessor (150), der kommunikativ mit der Anzeigevorrichtung und dem Benutzereingabesystem gekoppelt ist, der Prozessor zum:
Empfangen der Echtzeit-3D-Wetterdaten innerhalb eines 3D-Volumens (105) vom 3D-Wetterradarsystem;
Anweisen der Anzeigevorrichtung, die Echtzeit-3D-Wetterdaten anzuzeigen;
Empfangen einer Wetterwiedergabeanforderung vom Benutzereingabesystem;
Erstellen einer Wetterdatenschleife, die eine Funktion der Wetterwiedergabeanforderung ist, durch Extrahieren zeitgestempelter 3D-Wetterdaten aus dem Speicherpuffer; und
Erzeugen von Anzeigeanweisungen zum Rendern der Wetterdatenschleife als gleichzeitig und kontinuierlich wiedergebende Überlagerung der extrahierten zeitgestempelten 3D-Wetterdaten auf der Anzeige der Echtzeit-3D-Wetterdaten; und
die Anzeigevorrichtung, die als Reaktion auf die Anzeigeanweisungen die Wetterdatenschleife als gleichzeitige und kontinuierlich wiedergebende Überlagerung der extrahierten zeitgestempelten 3D-Wetterdaten auf der Anzeige der Echtzeit-3D-Wetterdaten rendert.

2. Flugzeugsystem nach Anspruch 1, wobei:
zum Erstellen der Wetterdatenschleife der Prozessor eine räumliche Ausdehnung und eine Zeitdauer identifiziert, und zeitgestempelte 3D-Wetterdaten aus dem Speicherpuffer extrahiert, die der jeweiligen räumlichen Ausdehnung und der jeweiligen Zeitdauer entsprechen.

3. Flugzeugsystem nach Anspruch 2, wobei:
eine Wetterwiedergabeanforderung eine von Folgenden ist: eine ausgewählte Teilmenge des 3D-Volumens, ein ausgewählter Zeitrahmen, eine ausgewählte Höhe und ein ausgewählter Blickwinkel.

4. Flugzeugsystem nach Anspruch 3, wobei die Anzeigevorrichtung ferner:
die Echtzeit-3D-Wetterdaten unter Verwendung eines ersten Visualisierungsformats anzeigt; und
die Wetterdatenschleife unter Verwendung eines zweiten Visualisierungsformats rendert, das sich vom ersten Visualisierungsformat unterscheidet.

5. Flugzeugsystem nach Anspruch 4, ferner umfassend:
ein Kommunikationssystem, das kommunikativ mit dem Anzeigesystem gekoppelt ist, das Kommunikationssystem zum Empfangen von einem oder mehreren von: Echtzeit-3D-Wetterdaten, 3D-Verkehrsdaten, EVS-Daten oder anderen Sensordaten von einer externen Quelle; und
wobei der Prozessor ferner ist zum:
Bestimmen eines Blickwinkels der externen Quelle; und
Erzeugen von Anweisungen für die Anzeigevorrichtung, um die empfangenen Echtzeit-3D-Wetterdaten von der externen Quelle, modifiziert um den Blickwinkel der externen Quelle, in die Anzeige der Echtzeit-3D-Wetterdaten zu integrieren;
wobei das Kommunikationssystem ferner zum Empfangen von einem oder mehreren von: Echtzeit-3D-Wetterdaten, 3D-Verkehrsdaten, EVS-Sensordaten und anderen Sensordaten von einer bordeigenen Quelle betreibbar ist; und
wobei der Prozessor ferner ist zum:
Bestimmen des Blickwinkels der externen Quelle basierend auf empfangenen Sensordaten von der bordeigenen Quelle.

6. Flugzeugsystem nach Anspruch 5, wobei der Prozessor ferner ist zum:
Empfangen zeitgestempelter Daten von der externen Quelle;
Empfangen zeitgestempelter Daten von der internen Quelle; und
Integrieren der zeitgestempelten Daten von der externen Quelle und zeitgestempelten Daten von der internen Quelle in die Wetterdatenschleife.

7. Prozessorimplementiertes Verfahren zur dreidimensionalen (3D) Wetteranzeige, umfassend:
Empfangen (304) von Echtzeit-3D-Wetterdaten innerhalb eines 3D-Volumens von einem 3D-Wetterradarsystem;
Anweisen (306) einer Anzeigevorrichtung, die Echtzeit-3D-Wetterdaten anzuzeigen;
Speichern (304) zeitgestempelter 3D-Wetterdaten in einem Speicherpuffer;
Empfangen (308) einer Wetterwiedergabeanforderung von einem Benutzereingabesystem;
Erstellen (310) einer Wetterdatenschleife, die eine Funktion der Wetterwiedergabeanforderung ist, durch Extrahieren zeitgestempelter 3D-Wetterdaten aus dem Speicherpuffer; und
Erzeugen (312) von Anzeigeanweisungen zum Rendern der Wetterdatenschleife als gleichzeitige und kontinuierlich wiedergebende Überlagerung der extrahierten zeitgestempelten Wetterdaten auf der Anzeige der Echtzeit-3D-Wetterdaten; und
an einer Anzeigevorrichtung, als Reaktion auf die Anzeigeanweisungen (314), Rendern der Wetterdatenschleife als gleichzeitige und kontinuierlich wiedergebende Überlagerung der extrahierten zeitgestempelten Wetterdaten auf der Anzeige der Echtzeit-3D-Wetterdaten.

8. Verfahren nach Anspruch 7, wobei:
Erstellen der Wetterdatenschleife das Identifizieren einer räumlichen Ausdehnung und einer Zeitdauer und das Extrahieren zeitgestempelter 3D-Wetterdaten vom Speicherpuffer umfasst, die der jeweiligen räumlichen Ausdehnung und der jeweiligen Zeitdauer entsprechen.

9. Verfahren nach Anspruch 8, wobei:
eine Wetterwiedergabeanforderung eine von Folgenden ist: eine ausgewählte Teilmenge des 3D-Volumens, ein ausgewählter Zeitrahmen, eine ausgewählte Höhe und ein ausgewählter Blickwinkel.

10. Verfahren nach Anspruch 9, ferner umfassend:
an der Anzeigevorrichtung
Anzeigen der Echtzeit-3D-Wetterdaten unter Verwendung eines ersten Visualisierungsformats; und
Rendern der Wetterdatenschleife unter Verwendung eines zweiten Visualisierungsformats, das sich vom ersten Visualisierungsformat unterscheidet.

11. Verfahren nach Anspruch 10, ferner umfassend:
Empfangen (502) eines oder mehrerer von: Echtzeit-3D-Wetterdaten, 3D-Verkehrsdaten, EVS-Daten, von einer externen Quelle; und
wobei der Prozessor ferner ist zum:
Bestimmen (504) eines Blickwinkels der externen Quelle; und
Erzeugen (506) von Anweisungen für die Anzeigevorrichtung, um die empfangenen Echtzeit-3D-Wetterdaten von der externen Quelle, modifiziert um den Blickwinkel der externen Quelle, in die Anzeige der Echtzeit-3D-Wetterdaten zu integrieren;
wobei das Kommunikationssystem ferner zum Empfangen von einem oder mehreren von: Echtzeit-3D-Wetterdaten, 3D-Verkehrsdaten, EVS-Sensordaten und anderen Sensordaten von einer bordeigenen Quelle betreibbar ist; und
wobei der Prozessor ferner ist zum:
Bestimmen des Blickwinkels der externen Quelle basierend auf empfangenen Sensordaten von der bordeigenen Quelle.

12. Verfahren nach Anspruch 11, ferner umfassend:
Empfangen zeitgestempelter Daten von der externen Quelle;
Empfangen zeitgestempelter Daten von der internen Quelle; und
Integrieren der zeitgestempelten Daten von der externen Quelle und zeitgestempelten Daten von der internen Quelle in die Wetterdatenschleife.

## Revendications

1. Système d'aéronef comprenant :
un système radar météorologique tridimensionnel (3D) (101) pour détecter des données météorologiques 3D en temps réel dans un volume 3D ;
une mémoire tampon (110) couplée en communication au système radar météorologique 3D, pour stocker les données météorologiques 3D en temps réel, sous forme de données météorologiques 3D horodatées ; et
un système d'affichage de données météorologiques 3D (102) couplé en communication au système de radar météorologique 3D et à la mémoire tampon, le système d'affichage de données météorologiques 3D comprenant :
un dispositif d'affichage (60) pour afficher les données météorologiques 3D en temps réel ;
un système d'entrée utilisateur (114) ; et
un processeur (150) couplé en communication au dispositif d'affichage et au système d'entrée utilisateur, le processeur étant configuré pour :
recevoir, en provenance du système radar météorologique 3D, les données météorologiques 3D en temps réel dans un volume 3D (105) ;
ordonner au dispositif d'affichage d'afficher les données météorologiques 3D en temps réel ;
recevoir, en provenance du système d'entrée utilisateur, une demande de rediffusion météorologique ;
construire une boucle de données météorologiques qui est une fonction de la demande de rediffusion météorologique, par extraction de données météorologiques 3D horodatées de la mémoire tampon ; et
générer des instructions d'affichage pour restituer la boucle de données météorologiques, sous la forme d'une superposition de rediffusion simultanée et continue des données météorologiques 3D horodatées extraites, sur l'affichage des données météorologiques 3D en temps réel ; et
le dispositif d'affichage, en réponse aux instructions d'affichage, restitue la boucle de données météorologiques, sous la forme d'une superposition de rediffusion simultanée et continue des données météorologiques 3D horodatées extraites, sur l'affichage des données météorologiques 3D en temps réel.

2. Système d'aéronef selon la revendication 1, dans lequel :
pour construire la boucle de données météorologiques, le processeur identifie une étendue spatiale et une durée et extrait des données météorologiques 3D horodatées de la mémoire tampon qui correspondent à l'étendue spatiale respective et à la durée respective.

3. Système d'aéronef selon la revendication 2, dans lequel :
une demande de rediffusion météorologique est un élément quelconque parmi : un sous-ensemble sélectionné du volume 3D, une période de temps sélectionnée, une altitude sélectionnée et un point de vue sélectionné.

4. Système d'aéronef selon la revendication 3, dans lequel le dispositif d'affichage procède en outre à :
l'affichage des données météorologiques 3D en temps réel à l'aide d'un premier format de visualisation ; et
la restitution de la boucle de données météorologiques à l'aide d'un second format de visualisation qui est différent du premier format de visualisation.

5. Système d'aéronef selon la revendication 4, comprenant en outre :
un système de communication couplé en communication au système d'affichage, le système de communication servant à recevoir, en provenance d'une source externe, un ou plusieurs éléments parmi : des données météorologiques 3D en temps réel, des données de trafic 3D, des données EVS ou toute autre donnée de capteur ; et
dans lequel le processeur est en outre configuré pour :
déterminer un point de vue de la source externe ; et
générer des instructions pour que le dispositif d'affichage intègre, dans l'affichage des données météorologiques 3D en temps réel, les données météorologiques 3D en temps réel reçues, en provenance de la source externe, modifiées par le point de vue de la source externe ;
dans lequel le système de communication est en outre utilisable pour recevoir, en provenance d'une source embarquée, un ou plusieurs éléments parmi : des données météorologiques 3D en temps réel, des données de trafic 3D, des données de capteur EVS et d'autres données de capteur ; et
dans lequel le processeur est en outre configuré pour :
déterminer le point de vue de la source externe sur la base des données de capteur reçues en provenance de la source embarquée.

6. Système d'aéronef selon la revendication 5, dans lequel le processeur est en outre configuré pour :
recevoir des données horodatées en provenance de la source externe ;
recevoir des données horodatées en provenance de la source interne ; et
intégrer les données horodatées provenant de la source externe et les données horodatées provenant de la source interne dans la boucle de données météorologiques.

7. Procédé mis en oeuvre par processeur pour l'affichage de données météorologiques tridimensionnelles (3D), comprenant :
la réception (304), en provenance d'un système radar météorologique 3D, de données météorologiques 3D en temps réel dans un volume 3D ;
l'ordre (306) donné à un dispositif d'affichage d'afficher les données météorologiques 3D en temps réel ;
le stockage (304) de données météorologiques 3D horodatées dans une mémoire tampon ;
la réception (308), en provenance d'un système d'entrée utilisateur, d'une demande de rediffusion météorologique ;
la construction (310) d'une boucle de données météorologiques qui est une fonction de la demande de rediffusion météorologique, par extraction de données météorologiques 3D horodatées de la mémoire tampon ; et
la génération (312) d'instructions d'affichage pour restituer la boucle de données météorologiques, sous la forme d'une superposition de rediffusion simultanée et continue des données météorologiques horodatées extraites, sur l'affichage des données météorologiques 3D en temps réel ; et
au niveau d'un dispositif d'affichage, en réponse aux instructions d'affichage, la restitution (314) de la boucle de données météorologiques, sous la forme d'une superposition de rediffusion simultanée et continue des données météorologiques horodatées extraites, sur l'affichage des données météorologiques 3D en temps réel.

8. Procédé selon la revendication 7, dans lequel :
la construction de la boucle de données météorologiques comprend l'identification d'une étendue spatiale et d'une durée et l'extraction de données météorologiques 3D horodatées de la mémoire tampon qui correspondent à l'étendue spatiale respective et à la durée respective.

9. Procédé selon la revendication 8, dans lequel :
une demande de rediffusion météorologique est un élément quelconque parmi : un sous-ensemble sélectionné du volume 3D, une période de temps sélectionnée, une altitude sélectionnée et un point de vue sélectionné.

10. Procédé selon la revendication 9, comprenant en outre :
sur le dispositif d'affichage,
l'affichage des données météorologiques 3D en temps réel à l'aide d'un premier format de visualisation ; et
la restitution de la boucle de données météorologiques à l'aide d'un second format de visualisation qui est différent du premier format de visualisation.

11. Procédé selon la revendication 10, comprenant en outre :
la réception (502), en provenance d'une source externe, d'un ou plusieurs éléments parmi :
des données météorologiques 3D en temps réel, des données de trafic 3D, des données EVS ; et
dans lequel le processeur est en outre configuré pour :
déterminer (504) un point de vue de la source externe ; et
générer (506) des instructions pour que le dispositif d'affichage intègre, dans l'affichage des données météorologiques 3D en temps réel, les données météorologiques 3D en temps réel reçues provenant de la source externe, modifiées par le point de vue de la source externe ;
dans lequel le système de communication est en outre utilisable pour recevoir, en provenance d'une source embarquée, un ou plusieurs éléments parmi : des données météorologiques 3D en temps réel, des données de trafic 3D, des données de capteur EVS et d'autres données de capteur ; et
dans lequel le processeur est en outre configuré pour :
déterminer le point de vue de la source externe sur la base des données de capteur reçues en provenance de la source embarquée.

12. Procédé selon la revendication 11, comprenant en outre :
la réception de données horodatées en provenance de la source externe ;
la réception de données horodatées en provenance de la source interne ; et
l'intégration des données horodatées provenant de la source externe et des données horodatées provenant de la source interne dans la boucle de données météorologiques.
